# EUROPEAN PATENT SPECIFICATION

(11) **EP 3 683 424 B1**
(45) Date of publication and mention of the grant of the patent: **03.04.2024**
(21) Application number: 20152218.2
(22) Date of filing: 16.01.2020
(51) Int. Cl.: F02C 6/18, F01K 23/10, F01K 25/10, F02C 1/10, F01D 15/10

(54) **WORK RECOVERY SYSTEM FOR A GAS TURBINE ENGINE UTILIZING A RECUPERATED SUPERCRITICAL C02 BOTTOMING CYCLE**
ARBEITSRÜCKGEWINNUNGSSYSTEM FÜR EIN GASTURBINENTRIEBWERK UNTER VERWENDUNG EINES NACHSCHALT-REKUPERATION-PROZESSES MIT SUPERKRITISCHEM CO2
SYSTÈME DE RÉCUPÉRATION DE TRAVAIL POUR UN MOTEUR À TURBINE À GAZ UTILISANT UN CYCLE DE FOND DE CO2 SUPERCRITIQUE RÉCUPÉRÉ

(30) Priority: 16.01.2019 US 201916248861
(43) Date of publication of application: 22.07.2020
(73) Proprietor: RTX Corporation, Farmington, CT 06032 (US)
(72) Inventor: SOMANATH, Nagendra, South Windsor, CT Connecticut 06074 (US); McAULIFFE, Brendan T., West Hartford, CT Connecticut 06119 (US); STAUBACH, Joseph B., Colchester, CT Connecticut 06415 (US)
(74) Representative: Dehns

(56) References cited:
- US-A1- 2013 269 334
- US-A1- 2018 313 232
- KIM MIN SEOK ET AL: "Study on the supercritical CO2power cycles for landfill gas firing gas turbine bottoming cycle", ENERGY, ELSEVIER, AMSTERDAM, NL, vol. 111, 17 June 2016 (2016-06-17), pages 893-909, XP029721633, ISSN: 0360-5442, DOI: 10.1016/J.ENERGY.2016.06.014
- MARCHIONNI MATTEO ET AL: "Techno-economic assessment of Joule-Brayton cycle architectures for heat to power conversion from high-grade heat sources using CO2in the supercritical state", ENERGY, ELSEVIER, AMSTERDAM, NL, vol. 148, 4 February 2018 (2018-02-04), pages 1140-1152, XP085361812, ISSN: 0360-5442, DOI: 10.1016/J.ENERGY.2018.02.005
- YOONHAN AHN ET AL: "Review of supercritical CO2 power cycle technology and current status of research and development", NUCLEAR ENGINEERING AND TECHNOLOGY, vol. 47, no. 6, 1 October 2015 (2015-10-01), pages 647-661, XP055694583, KP ISSN: 1738-5733, DOI: 10.1016/j.net.2015.06.009

## Description

### TECHNICAL FIELD

The present disclosure relates generally to a system for recovering waste heat in a gas turbine engine, and more specifically to a work recovery system utilizing a supercritical CO2 cycle to recover work from excess heat.

### BACKGROUND

Gas turbine engines, such as those utilized in commercial and military aircraft, include a compressor section that compresses air, a combustor section in which the compressed air is mixed with a fuel and ignited, and a turbine section across which the resultant combustion products are expanded. The expansion of the combustion products drives the turbine section to rotate. As the turbine section is connected to the compressor section via a shaft, the rotation of the turbine section further drives the compressor section to rotate. In some examples, a fan is also connected to the shaft and is driven to rotate via rotation of the turbine as well.

The operation of the gas turbine engine generates excessive amounts of heat due to the combustion and expansion processes. Energy that has been converted into heat and is subsequently expelled from the gas powered turbine as exhaust without providing work is referred to as waste heat. Waste heat is one of the primary sources of loss (inefficiency) in any thermodynamic cycle, and minimization of waste heat in an engine therefore increases the efficiency of the engine.

KIM MIN SEOK ET AL: "Study on the supercritical CO2 power cycles for landfill gas firing gas turbine bottoming cycle", of ENERGY, ELSEVIER, AMSTERDAM, NL, col. 111, 17 June 2016, p.893-909, XP02972633 discloses a prior art gas turbine engine as set forth in the preamble of claim 1.

US 2013/269334 A1 discloses a prior art power plant with a closed Brayton cycle.

YOONHAM AHN ET AL: "review of supercritical CO2 power cycle technology and current status of research and development" of NUCLEAR ENGINEERING AND TECHNOLOGY, vol.47, no. 6, 1 October 2015, p.647-661, XP055694583 discloses some prior art information about CO₂ power cycle technology.

### SUMMARY OF THE INVENTION

According to a first aspect of the invention, there is provided a gas turbine engine as recited in claim 1.

Another example of any of the above described gas turbine engines further includes a recuperator heat exchanger including a first flowpath connecting the working fluid compressor outlet to the second inlet of the heat exchanger.

In another example of any of the above described gas turbine engines the recuperator heat exchanger further includes a second flowpath connecting the working fluid turbine outlet to the working fluid compressor inlet.

In another example of any of the above described gas turbine engines the working fluid turbine outlet is connected to the working fluid compressor inlet via a heat rejection heat exchanger.

In another example of any of the above described gas turbine engines the heat rejection heat exchanger expels waste heat.

In another example of any of the above described gas turbine engines a fluid pressure at the working fluid compressor inlet is at least a supercritical pressure of a fluid in the working fluid bottoming cycle during standard operations.

In another example of any of the above described gas turbine engines during standard operations, a fluid pressure and temperature at the working fluid compressor inlet is at least at a supercritical pressure and temperature of the working fluid in the sCO2 bottoming cycle.

In another example of any of the above described gas turbine engines the recuperated bottoming cycle includes a mechanical output, and wherein the mechanical output is configured to transmit rotational work from the recuperated bottoming cycle to at least one other engine system.

In another example of any of the above described gas turbine engines the sCO2 bottoming cycle contains a CO2 fluid and the CO2 fluid is maintained at at least a supercritical pressure throughout an entirety of the sCO2 cycle.

According to a second aspect of the invention, a method for recovering work from waste heat in a gas turbine engine as recited in claim 10 is provided.

Another example of the above described method for recovering work from waste heat in a gas turbine engine further includes passing the sCO2 working fluid from the outlet of the waste recovery turbine through a recuperator heat exchanger, and passing an sCO2 working fluid from the compressor through the recuperator heat exchanger prior to providing the sCO2 working fluid from the compressor to the heat exchanger thereby transferring heat from the sCO2 working fluid exiting the turbine to the sCO2 working fluid entering the heat exchanger.

In another example of any of the above described exemplary methods for recovering work from waste heat in a gas turbine engine providing sCO2 working fluid from the outlet of the waste recovery turbine to the inlet of the compressor comprises passing the sCO2 working fluid through a heat rejection heat exchanger, thereby dumping waste heat from the sCO2 cycle to a heat sink.

In another example of any of the above described exemplary methods for recovering work from waste heat in a gas turbine engine ein the heat sink is at least one of fan duct air, ram air, fuel, and a transcritical CO2 refrigeration cycle.

In another example of any of the above described exemplary methods for recovering work from waste heat in a gas turbine engine providing sCO2 working fluid from the outlet of the waste recovery turbine to the inlet of the compressor comprises reducing a temperature of the sCO2 working fluid to a temperature and pressure above a supercritical temperature and pressure of the working fluid at the working fluid compressor inlet, wherein the temperature and pressure of the working fluid at the working fluid compressor inlet is configured to allow a margin for fluid property and operational fluctuations such that the compressor inlet fluid is maintained above a vapor dome of the sCO2 working fluid.

In another example of any of the above described exemplary methods for recovering work from waste heat in a gas turbine engine expanding the heated sCO2 working fluid across the waste recovery turbine, thereby driving the waste recovery turbine to rotate further comprises transmitting rotational work from the waste recovery turbine to at least one engine system in the gas turbine engine.

In another example of any of the above described exemplary methods for recovering work from waste heat in a gas turbine engine compressing the sCO2 working fluid comprises driving rotation of the compressor via the waste recovery turbine.

These and other features of the present invention can be best understood from the following specification and drawings, the following of which is a brief description.

### BRIEF DESCRIPTION OF THE DRAWINGS

Figure 1 illustrates a (high level) schematic view of an exemplary gas turbine engine.
Figure 2 schematically illustrates a gas turbine engine including a recuperating supercritical CO2 bottoming cycle.
Figure 3 illustrates a recuperating supercritical CO2 cycle diagram.

### DETAILED DESCRIPTION

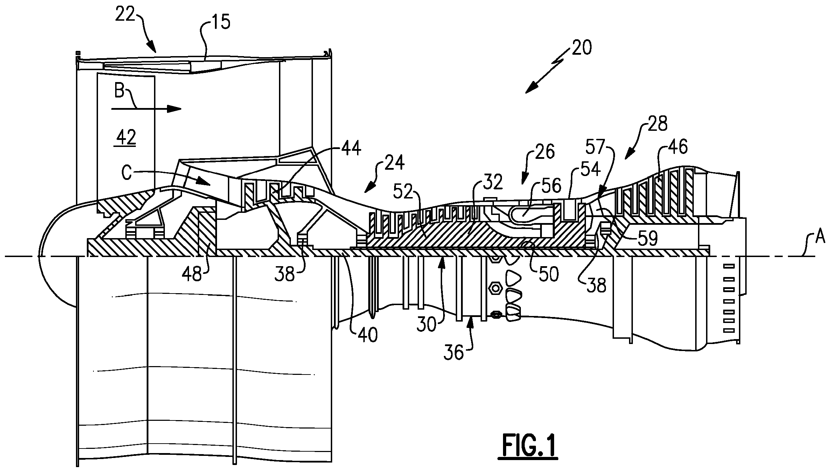

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including single spool or three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including turbojets and direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^^{0.5} (where °R = K x 9/5). The "Low corrected fan tip speed" as disclosed herein according to one non-limiting embodiment is less than about 1150 ft / second (350.5 meters/second).

Existing gas turbine engines, such as the exemplary geared turbofan engine of Figure 1, generate substantial amounts of heat that is exhausted from the turbine section 28 into a surrounding atmosphere. The exhaust heat represents wasted energy, and is a large source of inefficiency in the gas turbine engines.

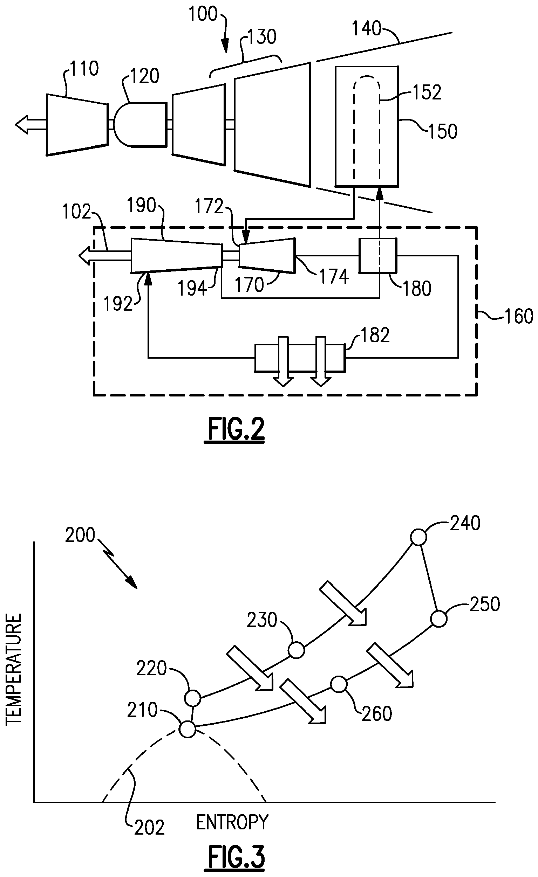

With continued reference to Figure 1, Figure 2 schematically illustrates a gas turbine engine 100, including a compressor section 110, a combustor section 120 and a turbine section 130, all of which are connected via a primary fluid flowpath. Downstream of the turbine section 130 is an exhaust casing 140 which exhausts air from the primary fluid flowpath into an ambient atmosphere downstream of the turbine. Existing gas turbine engines expel excess heat along with the turbine exhaust into the ambient atmosphere, without using the excess heat to generate additional shaft work.

In order to recapture the waste heat within the turbine engine system of Figure 2 and convert the waste heat to work, a heat exchanger 150 is positioned within the exhaust casing 140. The heat exchanger 150 is a plate/fin style heat exchanger disposed on one or more internal surface of the exhaust casing 140. In alternative examples outside the wording of the claims, the heat exchanger 150 can include openings and discrete fluid pathways that ingest turbine exhaust, pass the turbine exhaust through the heat exchanger 150, and then expel the turbine exhaust at a downstream edge of the heat exchanger 150. In both cases the heat exchanger 150 is referred to as having an inlet that receives the turbine exhaust and an outlet that expels the turbine exhaust.

In addition to the fluid pathway allowing turbine exhaust to pass over or through the heat exchanger 150, the heat exchanger 150 includes a second fluid pathway 152 connected to a supercritical CO2 (sCO2) bottoming Brayton cycle (referred to herein as the waste heat recovery system 160). The heat exchanger 150 is configured to transfer heat from the turbine exhaust to the waste heat recovery system 160, and the waste heat recovery system 160 converts the heat into rotational work. The waste heat recovery system 160 additionally recuperates waste heat within the recovery system 160 and is referred to as a recuperating bottoming cycle.

Included within the waste heat recovery system 160 is a turbine 170 with an inlet 172 connected to an output of the heat exchanger 150. The turbine 170 expands the heated working fluid and expels the heated working fluid through a turbine outlet 174. The expelled working fluid is passed through a relatively hot passage of a recuperating heat exchanger 180, and is passed to a relatively hot passage of a heat rejection heat exchanger 182. After passing through the heat rejection heat exchanger 182, the working fluid is passed to an inlet 192 of a compressor 190. The compressor 190 compresses the working fluid, and passes the compressed working fluid from a compressor outlet 194 to a cold passage of the recuperating heat exchanger 180.

During operation of the waste heat recovery system 160, the compressor 190 compresses the working fluid, and passes the compressed working fluid through the recuperating heat exchanger 180 and the heat exchanger 150, causing the compressed working fluid to be heated in each of the heat exchangers 150, 180. The heated working fluid is provided to the inlet 172 of the turbine 170 and expanded through the turbine 170, driving the turbine 170 to rotate. The rotation of the turbine 170 drives rotation of the compressor 190 and of an output shaft 102. The output shaft 102 is mechanically connected to one, or more, additional turbine engine systems and provides work to those systems using any conventional means for transmitting rotational work. Additionally, the rotational work can be converted into electricity and used to power one or more engine or aircraft systems using conventional electrical generator systems. By way of example, the means for transmitting rotational work can include a drive shaft, a gear system, an electrical generator and distribution system, or any similar structure.

In the illustrated example, the working fluid is a CO2 fluid, and is maintained at or above a supercritical point throughout the entirety of the working cycle. Due to being maintained at or above the supercritical point, the system 160 is referred to as a supercritical CO2 cycle (sCO2 cycle). With continued reference to Figure 2, Figure 3 illustrates a chart 200 showing a state of the working fluid throughout a working cycle of the waste heat recovery system 160 as a temperature with respect to entropy. Initially, the working fluid starts at or above a peak of a vapor dome 202 at point 210. The vapor dome 202 represents an upper boundary above which the working fluid is at the corresponding supercritical point. The starting point 210 is the state of the working fluid at the inlet of the compressor 190, prior to the working fluid undergoing compression by the compressor.

The working fluid is compressed in the compressor 190, causing the temperature and pressure of the working fluid to increase, while also imparting a minimal increase in the entropy of the working fluid until the working fluid is expelled from the compressor 190. Point 220 of the chart 200 represents the state of the working fluid at the compressor outlet 194. After exiting the compressor 190, the working fluid is passed through the recuperating heat exchanger 180, where the temperature and entropy of the working fluid are increased until an outlet of the recuperating heat exchanger 180 illustrated at point 230.

The outlet of the recuperating heat exchanger 180 is provided to the heat exchanger 150, across which the entropy and temperature of the working fluid are again increased until a point 240. The point 240 represents the state of the working fluid at the outlet of the heat exchanger 150 and at the inlet 172 of the turbine 170. As power is extracted from the working fluid in the turbine 170, the temperature and pressure drops, but neither fall below the level at the start of the cycle (point 210). After work has been extracted by the turbine 170, the expanded working fluid is provided to the recuperating heat exchanger 180 and a portion of the excess heat is transferred from the expanded working fluid to working fluid between points 220 and 230 of the cycle 200. The state of the working fluid at the outlet of the recuperating heat exchanger 180, and the inlet of the heat rejection heat exchanger 182 is illustrated at point 260.

In order to optimize operations of the sCO2 waste heat recovery system 160, the system 160 uses the heat rejection heat exchanger 182 to return the state of the working fluid to as close to the starting point 210 as possible. The waste heat can be dumped into any number of heat sinks within the gas turbine engine including, but not limited to, fan duct air, ram air, fuel, and a transcritical CO2 refrigeration cycle.

In the illustrated example of Figure 3, the starting point of the cycle 200 is immediately at the vapor dome 202. In practical examples, the starting point can be targeted at slightly above the peak of the vapor dome in order to prevent minor variations during operation and other practical considerations from causing the working fluid to fall below the vapor dome 202.

While described above in conjunction with a geared turbofan engine, it is appreciated that the waste heat recovery system described herein can be utilized in conjunction with any other type of turbine engine with only minor modifications that are achievable by one of skill in the art. Although an embodiment of this invention has been disclosed, a worker of ordinary skill in this art would recognize that certain modifications would come within the scope of the invention which is defined by the following claims.

## Claims

1. A gas turbine engine (20; 100) comprising:
a primary flowpath (C) fluidly connecting a compressor section (24; 110), a combustor section (26; 120), and a turbine section (28; 130); and
a heat exchanger (150) disposed in the primary flowpath (C), aft of and downstream of the turbine section (28; 130), the heat exchanger (150) including a first inlet for receiving fluid from the primary flowpath (C) and a first outlet for expelling fluid received at the first inlet, the heat exchanger (150) further including a second inlet fluidly connected to a supercritical CO2 (sCO2) bottoming cycle (160) and a second outlet connected to the sCO2 bottoming cycle (160), wherein the sCO2 bottoming cycle (160) is a recuperated Brayton cycle (160), wherein the sCO2 bottoming cycle (160) comprises a turbine (170) having a working fluid turbine inlet (172) connected to the second outlet of the heat exchanger (150) and a spent working fluid turbine outlet (174) connected to a working fluid compressor inlet (192) of a working fluid compressor (190), the working fluid compressor (190) further including a working fluid compressor outlet (194) connected to the second inlet of the heat exchanger (150);
**characterised in that**
the heat exchanger (150) is disposed within an exhaust casing (140), and wherein the heat exchanger (150) is a plate/fin style heat exchanger (150) disposed on one or more internal surface of the exhaust casing (140).

2. The gas turbine engine (20; 100) of claim 1, further comprising a recuperator heat exchanger (180) including:
a first flowpath connecting the working fluid compressor outlet (194) to the second inlet of the heat exchanger (150).

3. The gas turbine engine of claim 1 or 2, further comprising a/the recuperator heat exchanger (180), including:
a second flowpath connecting the working fluid turbine outlet (174) to the working fluid compressor inlet (192).

4. The gas turbine engine (20; 100) of any preceding claim, wherein the working fluid turbine outlet (174) is connected to the working fluid compressor inlet (192) via a heat rejection heat exchanger (182), wherein the heat rejection heat exchanger (182) optionally expels waste heat.

5. The gas turbine engine of any of any preceding claim, wherein a fluid pressure at the working fluid compressor inlet (192) is at least at a supercritical pressure of a working fluid in the sCO2 bottoming cycle (160) during standard operations.

6. The gas turbine engine of claim 5, wherein a fluid pressure and temperature at the working fluid compressor inlet (192) is at least at a supercritical pressure and temperature of the working fluid in the sCO2 bottoming cycle (160).

7. The gas turbine engine (20; 100) of any preceding claim, wherein the bottoming cycle (160) includes a mechanical output (102), and the mechanical output (102) is configured to transmit rotational work from the bottoming cycle (160) to at least one other engine system.

8. The gas turbine engine (20; 100) of claim 7, wherein the mechanical output (102) is connected to at least one of a drive shaft, a gear system, and an electrical generator and distribution system.

9. The gas turbine engine (20; 100) of any preceding claim, wherein the sCO2 bottoming cycle (160) contains a CO2 fluid and the CO2 fluid is maintained at at least a supercritical pressure throughout an entirety of the sCO2 cycle.

10. A method for recovering work from waste heat in a gas turbine engine (20; 100) comprising:
heating a supercritical CO2 (sCO2) working fluid in a heat exchanger (150) using a gas turbine engine exhaust (140);
providing the heated sCO2 working fluid to a waste recovery turbine (170);
expanding the heated sCO2 working fluid across the waste recovery turbine (170), thereby driving the waste recovery turbine (170) to rotate;
providing sCO2 working fluid from an outlet (174) of the waste recovery turbine (170) to an inlet (192) of a compressor (190) and compressing the sCO2 working fluid;
providing the compressed sCO2 working fluid to an inlet (172) of the waste recovery turbine (170); and
maintaining the sCO2 working fluid above a supercritical point through an entirety of the operations,
wherein the heat exchanger (150) is disposed in a primary flowpath (C) of the gas turbine engine (20; 100) and is aft of a turbine section (28; 130) of the gas turbine engine (20; 100),
**characterised in that**
the heat exchanger (150) is positioned within an exhaust casing (140) and wherein the heat exchanger (150) is a plate/fin style heat exchanger disposed on one or more internal surface of the exhaust casing (140).

11. The method of claim 10, further comprising passing the sCO2 working fluid from the outlet (174) of the waste recovery turbine (170) through a recuperator heat exchanger (180), and passing an sCO2 working fluid from the compressor (190) through the recuperator heat exchanger (180) prior to providing the sCO2 working fluid from the compressor (190) to the heat exchanger (150) thereby transferring heat from the sCO2 working fluid exiting the turbine (170) to the sCO2 working fluid entering the heat exchanger (150).

12. The method of claim 10 or 11, wherein providing sCO2 working fluid from the outlet (174) of the waste recovery turbine (170) to the inlet (192) of the compressor (190) comprises passing the sCO2 working fluid through a heat rejection heat exchanger (182), thereby dumping waste heat from the sCO2 cycle to a heat sink, wherein the heat sink is, for example, at least one of fan duct air, ram air, fuel, and a transcritical CO2 refrigeration cycle.

13. The method of any of claims 10 to 12, wherein providing sCO2 working fluid from the outlet (174) of the waste recovery turbine (170) to the inlet (192) of the compressor (190) comprises reducing a temperature of the sCO2 working fluid to a temperature and pressure above a supercritical temperature and pressure of the working fluid at the working fluid compressor inlet (192), wherein the temperature and pressure of the working fluid at the working fluid compressor inlet (192) is configured to allow a margin for fluid property and operational fluctuations such that the compressor inlet fluid is maintained above a vapor dome (202) of the sCO2 working fluid.

14. The method of any of claims 10 to 13, wherein expanding the heated sCO2 working fluid across the waste recovery turbine (170), thereby driving the waste recovery turbine (170) to rotate further comprises transmitting rotational work from the waste recovery turbine (170) to at least one engine system in the gas turbine engine (20; 100).

15. The method of any of claims 10 to 14, wherein compressing the sCO2 working fluid comprises driving rotation of the compressor (170) via the waste recovery turbine (170).

## Patentansprüche

1. Gasturbinentriebwerk (20; 100), umfassend:
einen primären Strömungsweg (C), der einen Kompressorabschnitt (24; 110), einen Brennkammerabschnitt (26; 120) und einen Turbinenabschnitt (28; 130) fluidisch verbindet; und
einen Wärmetauscher (150), der in dem primären Strömungsweg (C) hinter und stromabwärts von dem Turbinenabschnitt (28; 130) angeordnet ist, wobei der Wärmetauscher (150) einen ersten Einlass zum Aufnehmen von Fluid aus dem primären Strömungsweg (C) und einen ersten Auslass zum Ausstoßen von am ersten Einlass aufgenommenem Fluid beinhaltet, wobei der Wärmetauscher (150) ferner einen zweiten Einlass, der mit einem Nachschaltprozess (160) mit superkritischem CO2 (sCO2) fluidisch verbunden ist, und einen zweiten Auslass beinhaltet, der mit dem sCO2-Nachschaltprozess (160) verbunden ist, wobei der sCO2-Nachschaltprozess (160) ein rekuperierter Brayton-Prozess (160) ist, wobei der sCO2-Nachschaltprozess (160) eine Turbine (170) umfasst, die einen Arbeitsfluid-Turbineneinlass (172) aufweist, der mit dem zweiten Auslass des Wärmetauschers (150) verbunden ist, und einen Auslass (174) für verbrauchtes Arbeitsfluid, der mit einem Arbeitsfluid-Kompressoreinlass (192) eines Arbeitsfluid-Kompressors (190) verbunden ist, wobei der Arbeitsfluid-Kompressor (190) ferner einen Arbeitsfluid-Kompressorauslass (194) beinhaltet, der mit dem zweiten Einlass des Wärmetauschers (150) verbunden ist;
**dadurch gekennzeichnet, dass**
der Wärmetauscher (150) innerhalb eines Abgasgehäuses (140) angeordnet ist, und wobei der Wärmetauscher (150) ein platten-/rippenartiger Wärmetauscher (150) ist, der auf einer oder mehreren Innenflächen des Abgasgehäuses (140) angeordnet ist.

2. Gasturbinentriebwerk (20; 100) nach Anspruch 1, ferner umfassend einen Rekuperator-Wärmetauscher (180), der Folgendes beinhaltet:
einen ersten Strömungsweg, der den Arbeitsfluid-Kompressorauslass (194) mit dem zweiten Einlass des Wärmetauschers (150) verbindet.

3. Gasturbinentriebwerk nach Anspruch 1 oder 2, ferner umfassend einen/den Rekuperator-Wärmetauscher (180), der Folgendes beinhaltet:
einen zweiten Strömungsweg, der den Arbeitsfluid-Turbinenauslass (174) mit dem Arbeitsfluid-Kompressoreinlass (192) verbindet.

4. Gasturbinentriebwerk (20; 100) nach einem der vorhergehenden Ansprüche, wobei der Arbeitsfluid-Turbinenauslass (174) mit dem Arbeitsfluid-Kompressoreinlass (192) über einen Wärmeabfuhr-Wärmetauscher (182) verbunden ist, wobei der Wärmeabfuhr-Wärmetauscher (182) optional Abwärme ausstößt.

5. Gasturbinentriebwerk nach einem der vorhergehenden Ansprüche, wobei der Fluiddruck an dem Arbeitsfluid-Kompressoreinlass (192) mindestens dem superkritischen Druck eines Arbeitsfluids in dem sCO2-Nachschaltprozess (160) während des Standardbetriebs entspricht.

6. Gasturbinentriebwerk nach Anspruch 5, wobei ein Fluiddruck und eine Fluidtemperatur am Arbeitsfluid-Kompressoreinlass (192) mindestens bei einem superkritischen Druck und einer superkritischen Temperatur des Arbeitsfluids in dem sCO2-Nachschaltprozess (160) liegt.

7. Gasturbinentriebwerk (20; 100) nach einem der vorhergehenden Ansprüche, wobei der Nachschaltprozess (160) einen mechanischen Ausgang (102) beinhaltet und der mechanische Ausgang (102) dazu konfiguriert ist, Rotationsarbeit von dem Nachschaltprozess (160) an mindestens ein anderes Triebwerkssystem zu übertragen.

8. Gasturbinentriebwerk (20; 100) nach Anspruch 7, wobei der mechanische Ausgang (102) mit mindestens einer Antriebswelle, einem Getriebesystem oder einem elektrischen Generator- und Verteilungssystem verbunden ist.

9. Gasturbinentriebwerk (20; 100) nach einem der vorhergehenden Ansprüche, wobei der sCO2-Nachschaltprozess (160) ein CO2-Fluid enthält und das CO2-Fluid während des gesamten sCO2-Kreislaufs auf mindestens einem superkritischen Punkt gehalten wird.

10. Verfahren zum Rückgewinnen von Arbeit aus Abwärme in einem Gasturbinentriebwerk (20; 100), umfassend:
Erhitzen eines superkritischen CO2-(sCO2-)Arbeitsfluids in einem Wärmetauscher (150) unter Verwendung eines Gasturbinentriebwerksabgases (140);
Bereitstellen des erwärmten sCO2-Arbeitsfluids für eine Abwärmerückgewinnungsturbine (170);
Expandieren des erwärmten sCO2-Arbeitsfluids über die Abwärmerückgewinnungsturbine (170), wodurch die Abwärmerückgewinnungsturbine (170) zum Rotieren angetrieben wird;
Bereitstellen von sCO2-Arbeitsfluid von einem Ausgang (174) der Abwärmerückgewinnungsturbine (170) zu einem Einlass (192) eines Kompressors (190) und Verdichten des sCO2-Arbeitsfluids;
Bereitstellen des verdichteten sCO2-Arbeitsfluids zu einem Einlass (172) der Abwärmerückgewinnungsturbine (170); und
Halten des sCO2-Arbeitsfluids über einem superkritischen Punkt während der gesamten Dauer des Betriebs,
wobei der Wärmetauscher (150) in einem primären Strömungsweg (C) des Gasturbinentriebwerks (20; 100) angeordnet ist und sich hinter einem Turbinenabschnitt (28; 130) des Gasturbinentriebwerks (20; 100) befindet,
**dadurch gekennzeichnet, dass**
der Wärmetauscher (150) innerhalb eines Abgasgehäuses (140) angeordnet ist, und wobei der Wärmetauscher (150) ein platten-/rippenartiger Wärmetauscher ist, der auf einer oder mehreren Innenflächen des Abgasgehäuses (140) positioniert ist.

11. Verfahren nach Anspruch 10, ferner umfassend das Leiten des sCO2-Arbeitsfluids von dem Auslass (174) der Abwärmerückgewinnungsturbine (170) durch einen Rekuperator-Wärmetauscher (180) und das Leiten eines sCO2-Arbeitsfluids von dem Kompressor (190) durch den Rekuperator-Wärmetauscher (180), bevor das sCO2-Arbeitsfluid von dem Kompressor (190) dem Wärmetauscher (150) bereitgestellt wird, wodurch Wärme von dem die Turbine (170) verlassenden sCO2-Arbeitsfluid auf das in den Wärmetauscher (150) eintretende sCO2-Arbeitsfluid übertragen wird.

12. Verfahren nach Anspruch 10 oder 11, wobei das Bereitstellen von sCO2-Arbeitsfluid vom Auslass (174) der Abwärmerückgewinnungsturbine (170) zum Einlass (192) des Kompressors (190) das Leiten des sCO2-Arbeitsfluids durch einen Wärmeabfuhr-Wärmetauscher (182) umfasst, wodurch Abwärme aus dem sCO2-Kreislauf zu einer Wärmesenke abgeleitet wird, wobei die Wärmesenke beispielsweise mindestens eines von Gebläsekanalluft, Stauluft, Brennstoff und einem transkritischen CO2-Kältekreislauf ist.

13. Verfahren nach einem der Ansprüche 10 bis 12, wobei das Bereitstellen von sCO2-Arbeitsfluid vom Auslass (174) der Abwärmerückgewinnungsturbine (170) zum Einlass (192) des Kompressors (190) das Reduzieren einer Temperatur des sCO2-Arbeitsfluids auf eine Temperatur und einen Druck oberhalb einer superkritischen Temperatur und eines superkritischen Drucks des Arbeitsfluids am Arbeitsfluid-Kompressoreinlass (192) umfasst, wobei die Temperatur und der Druck des Arbeitsfluids am Arbeitsfluid-Kompressoreinlass (192) dazu ausgelegt sind, einen Spielraum für Fluideigenschafts- und Betriebsschwankungen zuzulassen, sodass das Kompressoreinlassfluid oberhalb einer Dampfkuppel (202) des sCO2-Arbeitsfluids gehalten wird.

14. Verfahren nach einem der Ansprüche 10 bis 13, wobei das Expandieren des erwärmten sCO2-Arbeitsfluids über die Abwärmerückgewinnungsturbine (170) und dadurch Antreiben der Abwärmerückgewinnungsturbine (170) zum Rotieren ferner das Übertragen von Rotationsarbeit von der Abwärmerückgewinnungsturbine (170) zu mindestens einem Motorsystem in dem Gasturbinentriebwerk (20; 100) umfasst.

15. Verfahren nach einem der Ansprüche 10 bis 14, wobei das Verdichten des sCO2-Arbeitsfluids das Antreiben der Rotation des Kompressors (170) über die Abwasserrückgewinnungsturbine (170) umfasst.

## Revendications

1. Moteur à turbine à gaz (20 ; 100) comprenant :
un trajet d'écoulement primaire (C) reliant fluidiquement une section de compresseur (24 ; 110), une section de chambre de combustion (26 ; 120) et une section de turbine (28 ; 130) ; et
un échangeur de chaleur (150) disposé dans le trajet d'écoulement primaire (C), à l'arrière et en aval de la section de turbine (28 ; 130), l'échangeur de chaleur (150) comportant une première entrée pour recevoir du fluide provenant du trajet d'écoulement primaire (C) et une première sortie pour expulser le fluide reçu au niveau de la première entrée, l'échangeur de chaleur (150) comportant en outre une seconde entrée reliée fluidiquement à un cycle de fond de CO2 supercritique (sCO2) (160) et une seconde sortie reliée au cycle de fond de sCO2 (160), dans lequel le cycle de fond de sCO2 (160) est un cycle de Brayton récupéré (160), dans lequel le cycle de fond de sCO2 (160) comprend une turbine (170) ayant une entrée de turbine de fluide de travail (172) reliée à la seconde sortie de l'échangeur de chaleur (150) et une sortie de turbine de fluide de travail usé (174) reliée à une entrée de compresseur de fluide de travail (192) d'un compresseur de fluide de travail (190), le compresseur de fluide de travail (190) comportant en outre une sortie de compresseur de fluide de travail (194) reliée à la seconde entrée de l'échangeur de chaleur (150) ;
**caractérisé en ce que**
l'échangeur de chaleur (150) est disposé à l'intérieur d'un boîtier d'échappement (140), et dans lequel l'échangeur de chaleur (150) est un échangeur de chaleur de type plaques/ailettes (150) disposé sur une ou plusieurs surfaces internes du boîtier d'échappement (140).

2. Moteur à turbine à gaz (20 ; 100) selon la revendication 1, comprenant en outre un échangeur de chaleur récupérateur (180) comportant :
un premier trajet d'écoulement reliant la sortie du compresseur de fluide de travail (194) à la seconde entrée de l'échangeur de chaleur (150).

3. Moteur à turbine à gaz selon la revendication 1 ou 2, comprenant en outre un/l'échangeur de chaleur récupérateur (180), comportant :
un second trajet d'écoulement reliant la sortie de turbine de fluide de travail (174) à l'entrée du compresseur de fluide de travail (192).

4. Moteur à turbine à gaz (20 ; 100) selon une quelconque revendication précédente, dans lequel la sortie de turbine de fluide de travail (174) est reliée à l'entrée du compresseur de fluide de travail (192) par le biais d'un échangeur de chaleur à rejet de chaleur (182), dans lequel l'échangeur de chaleur à rejet de chaleur (182) expulse éventuellement de la chaleur perdue.

5. Moteur à turbine à gaz selon une quelconque revendication précédente, dans lequel une pression de fluide à l'entrée du compresseur de fluide de travail (192) est au moins égale à une pression supercritique d'un fluide de travail dans le cycle de fond de sCO2 (160) pendant les opérations standard.

6. Moteur à turbine à gaz selon la revendication 5, dans lequel la pression et la température du fluide à l'entrée du compresseur de fluide de travail (192) sont au moins égales à une pression et une température supercritiques du fluide de travail dans le cycle de fond de sCO2 (160).

7. Moteur à turbine à gaz (20 ; 100) selon une quelconque revendication précédente, dans lequel le cycle de fond (160) comporte une sortie mécanique (102), et la sortie mécanique (102) est configurée pour transmettre le travail de rotation du cycle de fond (160) à au moins un autre système moteur.

8. Moteur à turbine à gaz (20 ; 100) selon la revendication 7, dans lequel la sortie mécanique (102) est reliée à au moins l'un d'un arbre d'entraînement, d'un système d'engrenages et d'un générateur électrique et d'un système de distribution.

9. Moteur à turbine à gaz (20 ; 100) selon une quelconque revendication précédente, dans lequel le cycle de fond de sCO2 (160) contient un fluide de CO2 et le fluide de CO2 est maintenu à au moins une pression supercritique pendant la totalité du cycle de sCO2.

10. Procédé de récupération de travail à partir de la chaleur perdue dans un moteur à turbine à gaz (20 ; 100) comprenant :
le chauffage d'un fluide de travail de CO2 supercritique (sCO2) dans un échangeur de chaleur (150) à l'aide d'un échappement de moteur à turbine à gaz (140) ;
la fourniture du fluide de travail de sCO2 chauffé à une turbine (170) de récupération des déchets ;
la dilatation du fluide de travail de sCO2 chauffé à travers la turbine (170) de récupération des déchets, entraînant ainsi la rotation de la turbine (170) de récupération des déchets ;
la fourniture du fluide de travail de sCO2 à partir d'une sortie (174) de la turbine (170) de récupération des déchets vers une entrée (192) d'un compresseur (190) et la compression du fluide de travail de sCO2 ;
la fourniture du fluide de travail de sCO2 comprimé à une entrée (172) de la turbine (170) de récupération des déchets ; et
le maintien du fluide de travail de sCO2 au-dessus d'un point supercritique pendant toute la durée des opérations,
dans lequel l'échangeur de chaleur (150) est disposé dans un trajet d'écoulement primaire (C) du moteur à turbine à gaz (20 ; 100) et se trouve à l'arrière d'une section de turbine (28 ; 130) du moteur à turbine à gaz (20 ; 100).
**caractérisé en ce que**
l'échangeur de chaleur (150) est disposé à l'intérieur d'un boîtier d'échappement (140), et dans lequel l'échangeur de chaleur (150) est un échangeur de chaleur de type plaques/ailettes disposé sur une ou plusieurs surfaces internes du boîtier d'échappement (140).

11. Procédé selon la revendication 10, comprenant en outre le passage du fluide de travail de sCO2 de la sortie (174) de la turbine (170) de récupération des déchets à travers un échangeur de chaleur (180) de récupérateur, et le passage du fluide de travail de sCO2 du compresseur (190) à travers l'échangeur de chaleur (180) du récupérateur avant la fourniture du fluide de travail de sCO2 du compresseur (190) à l'échangeur de chaleur (150) transférant ainsi la chaleur du fluide de travail de sCO2 sortant de la turbine (170) au fluide de travail de sCO2 entrant l'échangeur de chaleur (150) .

12. Procédé selon la revendication 10 ou 11, dans lequel la fourniture de fluide de travail sCO2 de la sortie (174) de la turbine (170) de récupération des déchets à l'entrée (192) du compresseur (190) comprend le passage du fluide de travail sCO2 à travers un second échangeur de chaleur (182) à rejet de chaleur, évacuant ainsi la chaleur résiduelle du cycle de sCO2 vers un dissipateur de chaleur, dans lequel le dissipateur de chaleur est, par exemple, au moins l'un de l'air du conduit de ventilateur, de l'air dynamique, du carburant et d'un cycle de réfrigération au CO2 transcritique.

13. Procédé selon l'une quelconque des revendications 10 à 12, dans lequel la fourniture du fluide de travail sCO2 depuis la sortie (174) de la turbine (170) de récupération des déchets jusqu'à l'entrée (192) du compresseur (190) comprend la réduction de la température du fluide de travail sCO2 à une température et une pression supérieures à une température et une pression supercritiques du fluide de travail au niveau de l'entrée du compresseur de fluide de travail (192), dans lequel la température et la pression du fluide de travail au niveau de l'entrée du compresseur de fluide de travail (192) sont configurées pour permettre une marge pour propriété du fluide et fluctuations opérationnelles de telle sorte que le fluide d'entrée du compresseur est maintenu au-dessus d'un dôme de vapeur (202) du fluide de travail sCO2.

14. Procédé selon l'une quelconque des revendications 10 à 13, dans lequel la dilatation du fluide de travail de sCO2 chauffé à travers la turbine (170) de récupération des déchets, entraînant ainsi la rotation de la turbine (170) de récupération des déchets comprend en outre la transmission du travail de rotation de la turbine (170) de récupération des déchets à au moins un système de moteur dans le moteur à turbine à gaz (20 ; 100).

15. Procédé selon l'une quelconque des revendications 10 à 14, dans lequel la compression du fluide de travail sCO2 comprend l'entraînement en rotation du compresseur (170) par le biais de la turbine (170) de récupération des déchets.
